# EUROPÄISCHE PATENTSCHRIFT

(11) **EP 2 298 480 B1**
(45) Veröffentlichungstag und Bekanntmachung des Hinweises auf die Patenterteilung: **09.09.2015**
(21) Anmeldenummer: 10006637.2
(22) Anmeldetag: 25.06.2010
(51) Int. Cl.: B23C 5/28

(54) **Fräser mit einer schaftartigen Grundform**
Milling machine with the basic shape of a shaft
Fraise dotée d'une forme de base de type arbre

(30) Priorität: 18.09.2009 DE 102009041812
(43) Veröffentlichungstag der Anmeldung: 23.03.2011
(73) Patentinhaber: Bauer, Joachim, 92714 Pleystein (DE)
(72) Erfinder: Bauer, Joachim, 92714 Pleystein (DE)
(74) Vertreter: Hafner, Dieter

(56) Entgegenhaltungen:
- WO-A1-01/58632
- DE-A1- 19 837 704
- JP-A- 8 318 419
- JP-A- 2002 154 032
- US-A- 5 655 907

## Beschreibung

Die Erfindung betrifft einen Fräser gemäß dem Oberbegriff des Anspruchs 1.

Ein solcher Fräser ist aus DE 198 37 704 A1 bekannt.

Aus dem Stand der Technik sind Fräser bekannt, an deren dem Werkzeug zugewandten Stirnfläche ein innerhalb des Fräsers verlaufender Kühlkanal mündet und das in ihm geführte Kühlmittel in Laufrichtung (Schneiderichtung) des Fräsers appliziert.

DE 198 37 704 A1 zeigt ein Werkzeug zur rotierenden Bearbeitung von Werkstücken, bei denen Förderelemente vorgesehen sind, um ein Kühlmedium in den Zerspanungsbereich zu führen. Dazu ist die Stirnfläche des Werkzeuges mit zwei rinnenartigen Vertiefungen ausgebildet, über die das Medium von einem zentralen Kanal zu den Umfangsbereichen des Werkzeuges geführt werden kann. Dabei kontaktiert das Kühlmittel vorher Bereiche des Werkstückes und gibt Kühlleistung an das Werkstück ab.

JP 2002-154032 zeigt unterschiedliche Ausführungen von Kühlmittelführungen, die zum Teil entgegen der Rotationsrichtung des Fräsers Kühlmittel in den Bearbeitungsbereich abgeben. Eine unmittelbare Beaufschlagung der Schneiden ohne vorherige Kontaktierung von Werkstückbereichen ist nicht vorgesehen.

US 5,655,907 zeigt einen Schaftfräser mit Schneiden an den radial außenliegenden Bereichen des Schaftes, wobei Kühlkanäle nach außen gerichtet sind, die ebenfalls Kühlflüssigkeit in den Bearbeitungsbereich abgeben. Auch hier ist die Führungsrichtung des Kühlmittels so angeordnet, dass das Kühlmittel überwiegend die zu beschneidende Fläche des Werkstückes beaufschlagt.

Der Erfindung liegt die Aufgabe zugrunde, einen Fräser mit den Merkmalen des Oberbegriffes des Anspruches 1 derart weiterzubilden, dass der Verschleiß des Fräswerkzeuges reduziert wird, die thermischen Belastungen des Fräsers vermindert werden und damit die Standzeit des Fräswerkzeuges erhöht wird. Ferner ist es Aufgabe der Erfindung den Fräser derart auszugestalten, dass neben der Schonung des Fräswerkzeuges auch eine schnelle, zuverlässige und maßgenaue Bearbeitung des Werkstücks vollzogen werden kann.

Diese Aufgabe wird durch die Merkmale des Anspruches 1 gelöst. Vorteilhafte Weiterbildungen der Erfindung ergeben sich aus den Unteransprüchen 2 - 14.

Es wird angesehen, dass wenigstens ein Austrittsbereich eines Kühlmittelkanals derart ausgebildet ist, dass die Austrittsrichtung eines im Kühlmittelkanal geführten Kühlmittels entgegen die Rotationsrichtung des Fräsers gerichtet ist. Obwohl die Ausrichtung des Austrittsbereiches des Kühlmittelkanals den Nachteil eines Widerstandes (Pralleffekt) im Kontaktbereich des Fräsers mit dem Werkstück hervorruft, birgt diese Lenkung des Kühlmittels den Vorteil einer erhöhten Kühlwirkung des Kühlmittels am Fräser.

In einer bevorzugten Ausführungsform ist der Austrittsbereich derart ausgebildet, dass das Kühlmittel direkt die den Materialabtrag am Werkzeug hervorrufenden Schneiden des Fräsers (damit die Hauptschneiden des Fräsers) beaufschlagt. Durch die unmittelbare Lenkung des Kühlmittels durch den Austrittsbereich des Kühlmittelkanals an die Hauptschneiden des Werkzeugs kann das Kühlmittel an der Hauptschneide eine große Wärmemenge aufnehmen. Im Stand der Technik kontaktiert das Kühlmittel, bevor es die am stärksten belastete Hauptschneide des Fräsers berührt, das Werkstück und nimmt von diesem Wärmeenergie auf. Damit wird im Stand der Technik die Fähigkeit der Wärmeaufnahme an der anschließend berührten Hauptschneide des Fräsers reduziert.

Gemäß der Erfindung verläuft der Kühlkanal innerhalb des Fräsers nach Art einer gegenläufigen Wendelung oder einer gegenläufigen Helix bezüglich der Rotationsrichtung des Fräsers. Dadurch, dass bereits innerhalb des Fräsers die Führung des Kühlmittels und damit der Kühlmittelkanal entgegengesetzt der Rotationsrichtung (Schneiderichtung) des Fräsers verläuft, wird einerseits die Lenkung und Strömung des Kühlmittels am Austrittsbereich des Kühlmittelkanals positiv beeinflusst, als auch eine verbesserte Kühlung des Fräsers erreicht.

Gemäß einer weiteren Ausgestaltung der Erfindung sind wenigstens zwei Austrittsbereiche von Kühlmittelkanälen am Fräser bezüglich der Stirnfläche des Fräsers punktsymmetrisch zum Zentrum und/oder punktsymmetrisch zur Rotationsachse des Fräsers angeordnet. Die symmetrische Anordnung der Austrittsbereiche ermöglicht eine gleichmäßige Verteilung des Kühlmittels während des Arbeitsprozesses des Fräsers.

Ferner ist es vorteilhaft, wenn die Querschnittsfläche des Kühlmittelkanals innerhalb des Fräsers im Wesentlichen konstant ist. Durch den konstanten Querschnitt des Kühlmittelkanals wird während des Durchflusses des Kühlmittels ein konstanter Druck und eine konstante Fließgeschwindigkeit erreicht. Dies vereinfacht die thermische Berechnung und Auslegung des erfindungsgemäßen Fräswerkzeugs.

In einer alternativen Ausführungsform ist die Querschnittsfläche des Kühlmittelkanals innerhalb des Fräswerkzeuges über dessen Länge mit einem sich verändernden Querschnitt versehen. Dies bedeutet, dass der Querschnitt in einem ersten Kühlmittelkanalabschnitt geringer ist als der Querschnitt in einem zweiten Kühlmittelkanalabschnitt innerhalb des Fräswerkzeuges. Zwar wird durch diese Maßnahme die Berechnung der Kühlwirkung innerhalb des Fräswerkzeuges schwieriger, jedoch kann durch diese Maßnahme eine gezielte Steuerung, insbesondere der Fließgeschwindigkeit des Kühlmittels innerhalb entsprechender Bereiche des Fräswerkzeuges gesteuert werden. Damit kann erreicht werden, dass an definierten Bereichen mehr Wärmeenergie vom Werkzeug an das Kühlmittel übergeht als an anderen Bereichen.

Vorteilhaft ist es darin zu sehen, dass der Fräser mehrere Austrittsbereiche eines Kühlmittelkanals aufweist und diese innerhalb des Fräsers mit einem gemeinsamen Einlasskanal verbunden sind, wobei der Einlasskanal an der in Gebrauchsstellung dem Werkstück abgewandten Stirnfläche des schaftartigen Fräsers angeordnet ist.

Nach einer vorteilhaften Ausgestaltung der Erfindung ist es vorgesehen, dass wenigstens ein weiterer Austrittsbereich eines Kühlmittelkanals derart angeordnet ist, dass die Austrittsrichtung eines im Kühlmittelkanal geführten Kühlmittels in Richtung der Rotationsrichtung des Fräsers ausgerichtet ist. Damit wird neben wenigstens einem Austrittsbereichs eines Kühlkanals des Fräsers ein Kühlmittel gegen die Rotationsrichtung des Fräsers und über einen weiteren Austrittsbereich appliziertes Kühlmittel in Richtung der Rotationsrichtung des Fräsers ausgegeben. Den jeweiligen Austrittsbereichen und den aus diesen austretenden Kühlmittel können unterschiedliche Funktionen zugeordnet werden. Beispielsweise kann das gegen die Rotationsrichtung des Fräsers gerichtete Kühlmittel in erster Linie die Funktion der Kühlung der Schneiden des Fräsers (insbesondere der Hauptschneiden) und das Kühlmittel, welches in Rotationsrichtung des Fräsers aus dem Fräser austritt, die Funktion des Spülens der Spanabtragräume (zwischen den Schneiden) des Fräsers ausführen. Unter der Spülfunktion wird die Wirkung verstanden, dass das Spülmittel, in dem Fall das Kühlmedium, die von den Schneiden des Fräsers abgescherten Späne durch die Spanabraumräume verstärkt transportiert.

Im Übrigen sei darauf hingewiesen, dass der Fräser vorteilhafterweise wenigstens zwei Gruppen von Austrittsbereichen aufweist, wobei bei einer ersten Gruppe die Austrittsbereiche das aus ihnen austretende Kühlmittel entgegen der Rotationsrichtung des Fräsers richtet und die Austrittsbereiche der zweiten Gruppe das in ihnen geführte Kühlmittel in Rotationsrichtung des Fräsers lenkt. Die in Rotationsrichtung des Fräsers ausgerichteten Austrittsbereiche des Kühlmittelkanals können wie oben beschrieben eine Spülfunktion ausführen und die entgegen die Rotationsrichtung des Fräsers gerichteten Austrittsbereiche des Kühlmittelkanals können eine Kühlfunktion insbesondere für die Schneiden des Fräsers ausführen. In diesem Zusammenhang kann es vorteilhaft sein, wenn die erste und die zweite Gruppe der Austrittsbereiche einzeln oder akkumuliert zu der jeweiligen Gruppe miteinander verglichen einen unterschiedlichen Volumenstrom an Kühlmittel und/oder Kühlmittel in unterschiedlichem Druck und/oder Fließgeschwindigkeit ausgibt. So können beispielsweise die Querschnittskonturen einer ersten Gruppe der Austrittsbereiche kleiner sein als die der zweiten Gruppe und damit der Austritt des Kühlmittels unter erhöhtem Druck vollzogen werden. Ein erhöhter Druck des austretenden Kühlmittels erleichtert dessen Lenkung beispielsweise auf die Schneiden des Fräswerkzeugs (Kühlfunktion). Auch kann zumindest eine Gruppe der Austrittsbereiche nach Art einer Düse geformt sein, wobei dadurch ein vergleichbarer Effekt erreicht wird.

Die Querschnittskonturform des Kühlmittelkanals kann vorteilhafterweise punkt- und/oder liniensymmetrisch ausgebildet sein. Konkrete Querschnittskonturformen des Kühlmittelkanals können beispielsweise kreisrunde oder sternförmige Formen sein. Auch länglich ausgebildete Querschnittskonturformen sind für wenigstens einen Austrittsbereich realisierbar, beispielsweise ist die Querschnittskonturform hierbei oval, rechteckig oder nierenförmig ausgebildet. Insbesondere, wenn die Querschnittskonturform wenigstens eines Austrittsbereiches eines Kühlmittelkanals länglich ausgebildet ist und die gegebenenfalls Längsachse mit der aus dem Zentrum des Fräsers sich weg erstreckenden Radiuslinie einen Winkel ungleich 0° einschließt, kann hierdurch ein vorteilhafter Effekt für die Kühlfunktion und/oder die Spülfunktion des austretenden Kühlmittels erreicht werden, weil Späne aus dem Schneidenbereich mit der Wirkung eines "Sprühfächers" entfernt werden. Beispielsweise beträgt der Winkel γ zwischen 0,5 und 10°. Der zusätzliche Austrittsbereich des Kühlmittelkanals der in erster Linie eine Spülfunktion der Spanabtragräume vollzieht, kann vorteilhafterweise zentrisch aus der Stirnfläche des Fräsers austreten. Dies ermöglicht eine einfache Fertigung dieses Austrittsbereiches bzw. des mit ihm verbundenen Kühlmittelkanals innerhalb des Fräswerkzeugs.

Der hier verwendete Begriff "Kühlmittel" umfasst allgemein ein Medium also sowohl Flüssigkeiten als auch Gase, wobei die Flüssigkeiten oder die Gase sowohl grundsätzlich eine Kühlfunktion, d.h. eine Wärmeaufnahme ausgehend von dem Werkzeug und/oder dem Werkstück zu dem Medium als auch eine Spülfunktion ausführen, wobei eine Spülfunktion derart zu verstehen ist, dass beispielsweise Span, der im Zwischenraum des Fräswerkzeugs und des Werkstückes platziert ist, aus diesem Bereich forttransportiert werden kann.

Die Erfindung ist anhand von Ausführungsbeispielen in den Zeichnungsfiguren näher erläutert. Diese zeigen
- Fig. 1: eine schematische Seitenansicht eines erfindungsgemäßen Fräsers während seiner Verwendung beim Fräsen eines Werkstückes;
- Fig. 2: eine schematische Seitenansicht des Fräsers gemäß Fig. 1;

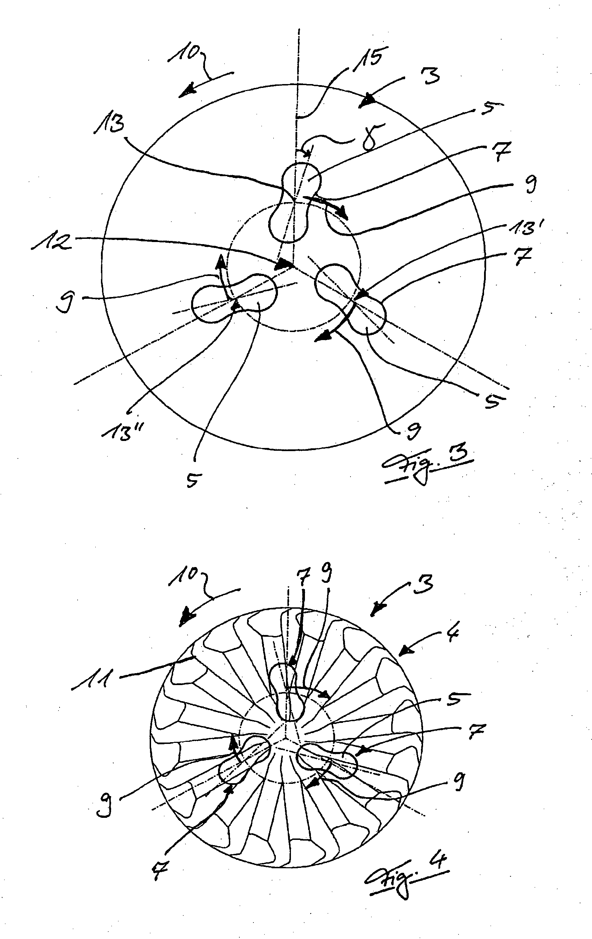

- Fig. 3: eine schematische Ansicht des Schaftendes des Fräsers in einer vereinfachten Darstellung;
- Fig. 4: eine schematische Darstellung des Schaftendes des Fräsers gemäß Fig. 3 mit dargestellten Schneiden;

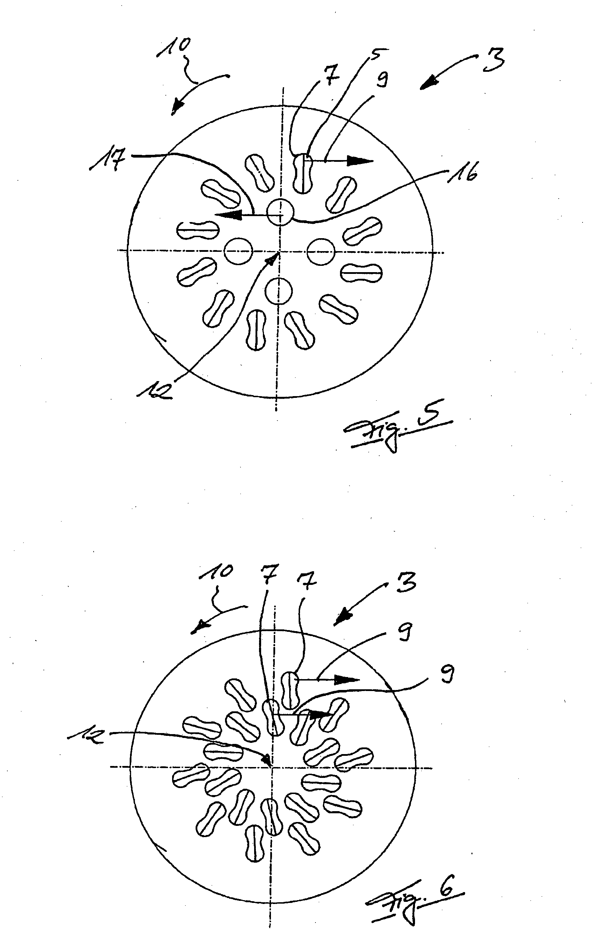

- Fig. 5: eine schematische Darstellung einer alternativen Ausführungsform des Schaftendes mit Kühl- und Spülkanälen;
- Fig. 6: eine schematische Darstellung des Fräserschaftendes einer weiteren alternativen Ausführungsform;

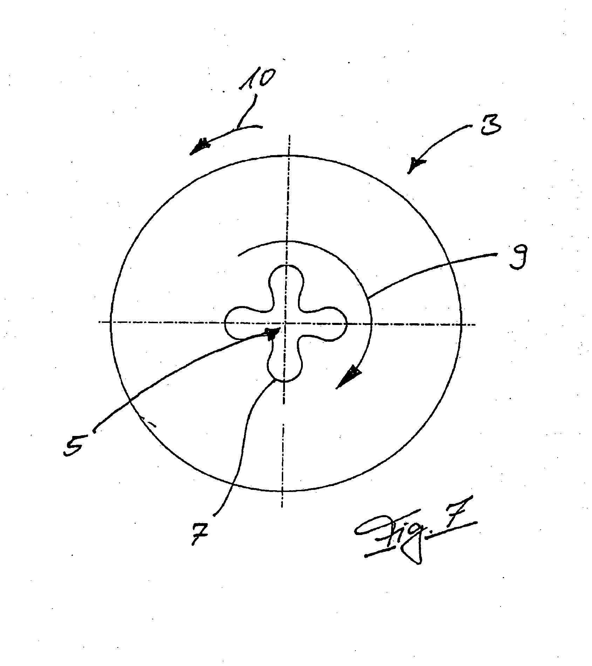

- Fig. 7: eine schematische Darstellung des Fräserschaftendes einer alternativen Ausführungsform;

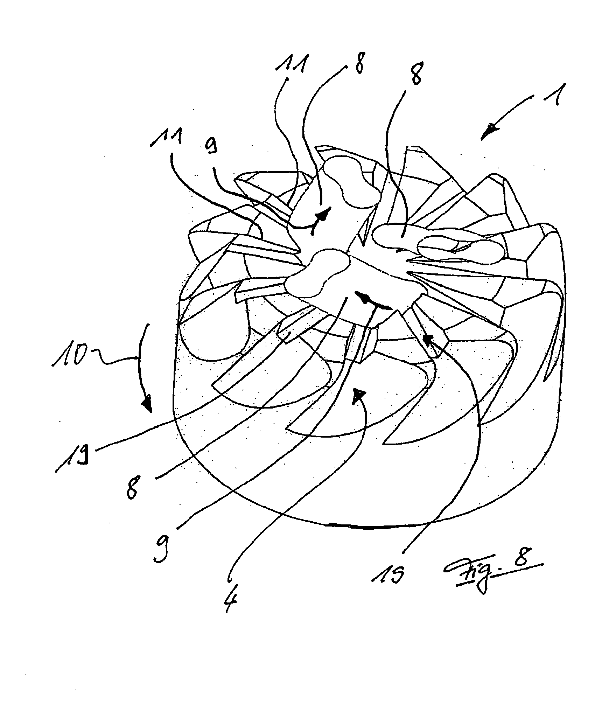

- Fig. 8: eine schematische perspektivische Darstellung des Fräsers mit austretendem Kühlmittel.

Aus den dargestellten Zeichnungsfiguren 1 - 7 ist ein Fräser 1 mit einer schaftartigen Grundform zum Fräsen eines Werkstückes 2 dargestellt. Der Fräser 1 steht mit den an der Stirnfläche 3 angeordneten Schneiden 4 mit dem Werkstück 2 in Eingriff und trägt von diesem in einem trennenden Verfahren Span ab. Der Fräser 1 ist mit wenigstens einem Kühlmittelkanal 5, der innerhalb des Fräsers 1 angeordnet ist, versehen, wobei der Kühlmittelkanal 5 im Bereich 6 der Stirnfläche 3 des Fräsers 1 in einen Austrittsbereich 7 mündet.

Mit einem schwarzen Balken, der mit dem Bezugszeichen 8 versehen ist, ist in Zeichnungsfigur 2 das aus dem Austrittsbereich 7 des Kühlmittelkanals 5 austretende Kühlmittel 8 schematisch dargestellt. Hierbei ist wesentlich, dass die Austrittsrichtung (Pfeil 9) des im Kühlmittelkanal 5 geführten Kühlmittels 8 entgegen die Rotationsrichtung (Pfeil 10) des Fräsers 1 gerichtet ist. Dies lässt sich insbesondere daran in Zeichnungsfigur 2 erkennen, dass die Austrittsrichtung 9 des Kühlmittels 8 ausgehend von der Stirnfläche 3 in eine andere Richtung wie der Winkel β der Schneiden 4 des Fräsers 1 geneigt ist. So ist beispielsweise erkennbar, dass der Winkel α der zwischen der Stirnfläche 3 und dem Richtungspfeil 9 der Kühlmittelaustrittsrichtung einbeschrieben ist, einen Winkel von 0 - 90° einschließt und der den Verlauf der Schneide 4 zur Stirnfläche 3 beschreibende Winkel β einen Winkel von 90 - 180° einschließt, vgl. die in Zeichnungsfigur 2 dargestellte Hilfskonstruktion A zur verbesserten Darstellung des Winkels β. In einer weiteren Ausführungsform ist die Austrittsrichtung 9 nahezu rechtwinklig zur Schneidkante 11 der Schneide 4 ausgerichtet. Damit ist der Austrittsbereich 7 derart ausgebildet, dass das Kühlmittel 8 direkt die den Materialabtrag am Werkstück 2 hervorrufenden Schneiden 11 (Hauptschneiden) beaufschlagt werden.

Der Kühlmittelkanal verläuft innerhalb des Fräsers 1 nach Art einer gegenläufigen Wendelung oder einer gegenläufigen Helix bezüglich der Rotationsrichtung 10 des Fräsers 1 (nicht dargestellt).

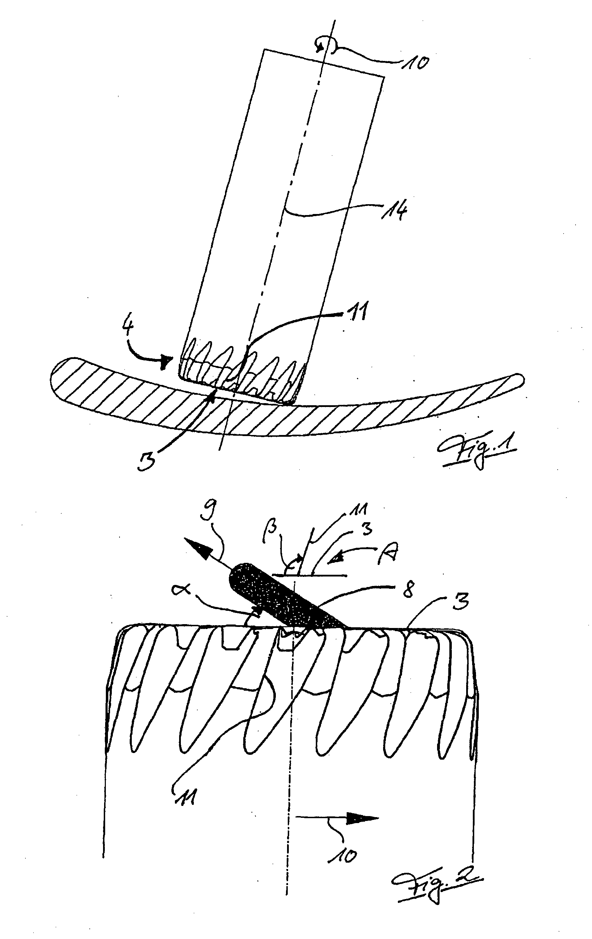

Wie aus den Darstellungen der Stirnflächen 3 des Fräsers 1 erkennbar ist, sind an der Stirnfläche 3 drei Austrittsbereiche 7 von Kühlkanälen 5 angeordnet, wie beispielsweise in Zeichnungsfigur 3 dargestellt, sind die Austrittsbereiche 7 bezüglich des Zentrums 12 der Stirnfläche 3 äquidistant angeordnet. Beispielsweise sind - wie in Zeichnungsfigur 3 dargestellt - die Austrittsbereiche 7 nierenförmig im Querschnitt ausgebildet und liegen mit ihren jeweiligen Zentren 13, 13', 13" auf einer gemeinsamen Kreislinie mit einem konstanten Abstand vom Zentrum 12. Im Fall von Zeichnungsfigur 3 sind die Austrittsbereiche 7 um 120° zueinander versetzt und bilden dabei nach Art einer Kongruenzabbildung eine Drehspiegelung um das Zentrum 12. Das Zentrum 12 bildet einen Punkt auf der Geraden der Rotationsachse 14 des Fräsers 1, vgl. Fig. 1.

Zeichnungsfigur 4 zeigt die Seitenansicht des Fräsers ergänzend zu der Darstellung in Zeichnungsfigur 3 die Schneiden 4 des Fräsers 1.

Die Längsachse des in Zeichnungsfigur 3 länglich ausgebildeten Austrittsbereiches 7 schließt einen Winkel γ mit der Radiallinie 15 des Fräsers 1 ein. Als Radiallinie 15 wird hierbei die Radiuslinie verstanden, die das Zentrum 12 geradlinig mit dem Kreisbogen (Außenkontur des Fräsers) verbindet. Durch den Winkelversatz γ wird die entgegen die Rotationsrichtung 10 des Fräsers gerichtete Austrittsrichtung 9 des Kühlmittels 8 begünstigt. Insbesondere geht dies aus Zeichnungsfigur 4 hervor, dort sind zusätzlich zu Zeichnungsfigur 3 die Hauptschneiden 4 des Fräsers 1 dargestellt.

In Zeichnungsfigur 5 sind zusätzlich zu den Austrittsbereichen 7 weitere Austrittsbereiche 16 dargestellt. Die weiteren Austrittsbereiche 16 haben einen kreisrunden Querschnitt und sind derart ausgebildet, dass die Austrittsrichtung 17 eines in ihnen geführten Kühlmittels 8 in Richtung der Rotationsrichtung 10 des Fräsers 1 ausgerichtet ist. Damit wird während der Bearbeitung des Werkstückes 2 durch den Fräser 1 gemäß Zeichnungsfigur 5 einmal über die Austrittsbereiche 7 ein Kühlmittel 8 entgegen die Rotationsrichtung 10 des Fräsers 1 appliziert und gleichzeitig über die weiteren Austrittsbereiche 16 ein Kühlmittel 8 in Austrittsrichtung (Pfeil 17) in Richtung der Rotationsrichtung (Pfeil 10) ausgegeben. Damit weist der Fräser 1 zwei Gruppen von Austrittsbereichen 7, 16 auf, wobei bei einer ersten Gruppe die Austrittsbereiche 7 das aus ihnen austretende Kühlmittel 8 entgegen die Rotationsrichtung 10 des Fräsers 1 richtet und die Austrittsbereiche 16 der zweiten Gruppe das in ihnen geführte Kühlmittel 8 in Rotationsrichtung 10 des Fräsers 1 gerichtet lenkt. Hierbei können die Austrittsbereiche 7, 16 einzeln oder akkumuliert zu der jeweiligen Gruppe miteinander verglichen einen unterschiedlichen Volumenstrom an Kühlmittel ausgeben.

Zeichnungsfigur 6 lehrt eine weitere Ausführung, in der die Austrittsbereiche 7 auf zwei Kreislinien zum Zentrum 12 liegend angeordnet sind, wobei die beiden Kreislinien einen unterschiedlichen Abstand zum Zentrum 12 aufweisen. Sowohl die auf der ersten Kreislinie liegenden Austrittsbereiche 7 als auch die auf der zweiten Kreislinie liegenden Austrittsbereiche 7 lenken das aus ihnen applizierte Kühlmittel 8 entgegen die Rotationsrichtung 10 des Fräsers auf die Schneiden 4 des Fräsers 1.

Eine weitere Ausführungsform ist in Zeichnungsfigur 7 dargestellt. Dort ist der Austrittsbereich 7 und/oder der mit dem Austrittsbereich 7 verbundene Kühlmittelkanal 5 zentrisch und sternförmig im Fräser 1 angeordnet. Die Sternform 1 erfährt über ihre Länge innerhalb des Fräsers eine Wendelung, so dass das im Austrittsbereich 7 austretende Kühlmittel 8 einen Drall in der Austrittsrichtung 9 erfährt, der entgegen der Rotationsrichtung 10 des Fräsers gerichtet ist.

In Zeichnungsfigur 8 ist die Ausführungsform des Fräsers 1 mit im Querschnitt nierenförmigen Austrittsbereichen 7 gemäß Zeichnungsfigur 4 perspektivisch dargestellt. Aus der Darstellung geht hervor, dass das Kühlmittel 8 eine Ausrichtung 9 entgegen der Rotationsrichtung 10 des Fräsers 1 erfährt. Damit werden die Hauptschneiden 11 z.B. direkt mit dem Kühlmittel 8 beaufschlagt. Das austretende Kühlmittel 8 ist mit den nierenförmigen "Strängen" schematisch dargestellt. Auch die Spanabraumräume 19 gehen aus Zeichnungsfigur 8 erkennbar hervor.

### BEZUGSZEICHENLISTE

- 1: Fräser
- 2: Werkstück
- 3: Stirnfläche
- 4: Schneide
- 5: Kühlmittelkanal
- 6: Bereich
- 7: Austrittsbereich
- 8: Kühlmittel
- 9: Pfeil (Austrittsrichtung)
- 10: Pfeil (Rotationsrichtung)
- 11: Schneidkante
- 12: Zentrum v. 3
- 14: Rotationsachse
- 15: Radiallinie
- 16: weiterer Austrittsbereich
- 17: Pfeil (Austrittsrichtung v. 16)
- 18: Längsachse
- 19: Spanabraumraum

- α: v. 3 und 9
- β: v. 3 und 10
- γ: v. 15 und 18

## Patentansprüche

1. Fräser (1) mit einer schaftartigen Grundform zum Fräsen eines Werkstückes (2), wobei zumindest an der dem Werkstück (2) zugewandten Stirnfläche (3) des Fräsers Schneiden (4) angeordnet sind und wenigstens ein Kühlmittelkanal (5) innerhalb des Fräsers angeordnet ist, wobei der Kühlmittelkanal (5) im Bereich (6) der Stirnfläche (3) des Fräsers (1) in einen Austrittsbereich (7) mündet, wobei wenigstens ein Austrittsbereich (7) eines Kühlmittelkanals (5) derart ausgebildet ist, dass die Austrittsrichtung (9) eines im Kühlmittelkanal (5) geführten Kühlmittels (8) gegen die Rotationsrichtung (10) des Fräsers (1) gerichtet ist,
**dadurch gekennzeichnet, dass**
der Kühlmittelkanal (5) innerhalb des Fräsers (1) nach Art einer gegenläufigen Wendelung oder einer gegenläufigen Helix bezüglich der Rotationsrichtung (10) des Fräsers (1) verläuft.

2. Fräser nach Anspruch 1,
**dadurch gekennzeichnet, dass**
der Austrittsbereich (7) derart ausgebildet ist, dass das Kühlmittel (8) die den Materialabtrag am Werkstück (2) hervorrufenden Schneiden (4) beaufschlagt.

3. Fräser nach einem der Ansprüche 1 - 2,
**dadurch gekennzeichnet, dass**
wenigstens zwei Austrittsbereiche (7) von Kühlmittelkanälen (5) am Fräser bezüglich der Stirnfläche (3) des Fräsers (1) punktsymmetrisch zum Zentrum und/oder punktsymmetrisch zur Rotationsachse (14) des Fräsers (1) angeordnet sind.

4. Fräser nach einem der vorhergehenden Ansprüche,
**dadurch gekennzeichnet, dass**
innerhalb des Fräsers (1) die Querschnittsfläche des Kühlmittelkanals (5) im Wesentlichen konstant ist.

5. Fräser nach einem der Ansprüche 1 - 3,
**dadurch gekennzeichnet, dass**
sich innerhalb des Fräsers (1) die Querschnittsfläche des Kühlmittelkanals (5) ändert.

6. Fräser nach einem der vorhergehenden Ansprüche,
**dadurch gekennzeichnet, dass**
der Fräser (1) mehrere Austrittsbereiche (7) eines Kühlmittelkanals (5) aufweist und diese innerhalb des Fräsers (1) mit einem gemeinsamen Einlasskanal verbunden sind, wobei der Einlasskanal in die in Gebrauchsstellung dem Werkstück (2) abgewandten Stirnfläche (3) des schaftartigen Fräsers (1) mündet.

7. Fräser nach einem der vorhergehenden Ansprüche,
**dadurch gekennzeichnet, dass**
wenigstens ein weiterer Austrittsbereich (16) eines Kühlmittelkanals (5) derart angeordnet ist, dass die Austrittsrichtung (17) eines im Kühlmittelkanal (5) geführten Kühlmittels (8) in Richtung der Rotationsrichtung (10) des Fräsers (1) weist.

8. Fräser nach einem der vorhergehenden Ansprüche,
**dadurch gekennzeichnet, dass**
der Fräser (1) wenigstens zwei Gruppen von Austrittsbereichen (7, 16) aufweist, wobei bei einer ersten Gruppe der Austrittsbereiche (7) das aus ihnen austretende Kühlmittel (8) gegen die Rotationsrichtung (10) des Fräsers (1) weist und bei einer zweiten Gruppe das in ihnen geführten Kühlmittels (8) in Rotationsrichtung (10) des Fräsers weist.

9. Fräser nach Anspruch 8,
**dadurch gekennzeichnet, dass**
die erste und die zweite Gruppe der Austrittsbereiche (7, 16) einzeln oder akkumuliert zur anderen Gruppe einen unterschiedlichen Volumenstrom an Kühlmittel (8) ausgibt.

10. Fräser nach einem der vorhergehenden Ansprüche,
**dadurch gekennzeichnet, dass**
die Querschnittskonturform des Kühlmittelkanals (5) punkt- und/oder liniensymmetrisch ist.

11. Fräser nach einem der vorhergehenden Ansprüche,
**dadurch gekennzeichnet, dass**
die Querschnittskonturform wenigstens eines Austrittsbereiches (7, 16) eines Kühlmittelkanals (5) länglich ausgebildet ist.

12. Fräser nach Anspruch 11,
**dadurch gekennzeichnet, dass**
die Längsachse (18) mit der aus dem Zentrum (12) des Fräsers (1) sich weg erstreckenden Radiuslinie (15) einen Winkel γ einschließt.

13. Fräser nach einem der vorhergehenden Ansprüche,
**dadurch gekennzeichnet, dass**
die Querschnittskonturform des Austrittsbereichs (7, 16) eines Kühlmittelkanals (5) nierenförmig ausgebildet ist.

14. Fräser nach einem der vorhergehenden Ansprüche,
**dadurch gekennzeichnet, dass**
wenigstens ein weiterer Austrittsbereich (7, 16) eines Kühlmittelkanals (5) zentrisch aus der Stirnfläche (3) des Fräsers (1) austritt.

## Claims

1. Milling cutter (1) having a shank-like basic shape for milling a workpiece, wherein lips (4) are arranged at least on that end face (3) of the milling cutter that faces the workpiece (2), and at least one coolant duct (5) is arranged within the milling cutter, wherein the coolant duct (5) leads into an outlet region (7) in the region (6) of the end face (3) of the milling cutter (1), wherein at least one outlet region (7) of a coolant duct (5) is configured such that the outlet direction (9) of a coolant (8) conducted through the coolant duct (5) is directed counter to the rotation direction (10) of the milling cutter (1), **characterized in that** the coolant duct (5) extends within the milling cutter (1) in the manner of a contrary spiral or contrary helix with respect to the rotation direction (10) of the milling cutter (1).

2. Milling cutter according to Claim 1, **characterized in that** the outlet region (7) is configured such that the coolant (8) impinges on the lips that remove material from the workpiece (2).

3. Milling cutter according to either of Claims 1 and 2, **characterized in that** at least two outlet regions (7) of coolant ducts (5) are arranged on the milling cutter in a point-symmetrical manner with respect to the end face (3) of the milling cutter (1) and/or in a point-symmetrical manner with respect to the rotation axis (14) of the milling cutter (1).

4. Milling cutter according to one of the preceding claims, **characterized in that** the cross-sectional area of the coolant duct (5) is substantially constant within the milling cutter (1).

5. Milling cutter according to one of Claims 1-3, **characterized in that** the cross-sectional area of the coolant duct (5) changes within the milling cutter (1).

6. Milling cutter according to one of the preceding claims, **characterized in that** the milling cutter (1) has a plurality of outlet regions of a coolant duct (5) and these are connected within the milling cutter (1) to a common inlet duct, wherein the inlet duct leads into that end face (3) of the shank-like milling cutter (1) that faces away from the workpiece (2) in the use position.

7. Milling cutter according to one of the preceding claims, **characterized in that** at least one further outlet region (16) of a coolant duct (5) is arranged such that the outlet direction (17) of a coolant conducted through the coolant duct (5) is directed in the rotation direction (10) of the milling cutter (1).

8. Milling cutter according to one of the preceding claims, **characterized in that** the milling cutter (1) has at least two groups of outlet regions (7, 16), wherein, in the case of a first group of outlet regions (7), the coolant (8) emerging therefrom is directed counter to the rotation direction (10) of the milling cutter (1), and in the case of the second group, the coolant (8) conducted therein is directed in the rotation direction (10) of the milling cutter.

9. Milling cutter according to Claim 8, **characterized in that** the first and the second group of outlet regions (7, 16) discharges a different volumetric flow of coolant (8) to the other group individually or in an accumulated manner.

10. Milling cutter according to one of the preceding claims, **characterized in that** the shape of the cross-sectional contour of the coolant duct (5) is point-symmetrical or line-symmetrical.

11. Milling cutter according to one of the preceding claims, **characterized in that** the shape of the cross-sectional contour of at least one outlet region (7, 16) of a coolant duct (5) is configured in an elongate manner.

12. Milling cutter according to Claim 11, **characterized in that** the longitudinal axis (18) encloses an angle γ with the radius line (15) extending away from the centre (12) of the milling cutter (1).

13. Milling cutter according to one of the preceding claims, **characterized in that** the shape of the cross-sectional contour of the outlet region (7, 16) of a coolant duct (5) is configured in a kidney-shaped manner.

14. Milling cutter according to one of the preceding claims, **characterized in that** at least one further outlet region (7, 16) of a coolant duct (5) emerges centrally from the end face (3) of the milling cutter (1).

## Revendications

1. Fraise (1) dotée d'une forme de base de type arbre pour fraiser une pièce (2), pour laquelle des dents (4) sont disposées au moins sur la face (3) de la fraise orientée vers la pièce (2) et au moins un conduit de réfrigérant (5) est disposé à l'intérieur de la fraise, pour laquelle le conduit de réfrigérant (5) débouche dans une zone de sortie (7) dans la zone (6) de la face (3) de la fraise (1), pour laquelle au moins une zone de sortie (7) d'un conduit de réfrigérant (5) est constituée de telle sorte que la direction de sortie (9) d'un réfrigérant (8) guidé dans le conduit de réfrigérant (5) est orientée contre le sens de rotation (10) de la fraise (1), **caractérisée en ce que** le conduit de réfrigérant (5) à l'intérieur de la fraise (1) passe à la manière d'une spirale en sens contraire ou d'une hélice en sens contraire par rapport au sens de rotation (10) de la fraise (1).

2. Fraise selon la revendication 1 **caractérisée en ce que** la zone de sortie (7) est constituée de telle manière que le réfrigérant (8) alimente les dents (4) engendrant l'enlèvement de matériau sur la pièce (2).

3. Fraise selon les revendications 1 - 2 **caractérisée en ce qu'**au moins deux zones de sortie (7) de conduits de réfrigérant (5) sont disposées sur la fraise respectivement à la face (3) de la fraise (1) de façon symétrique ponctuelle par rapport au centre et/ou symétrique ponctuelle à l'axe de rotation (14) de la fraise (1).

4. Fraise selon l'une quelconque des revendications précédentes **caractérisée en ce qu'**à l'intérieur de la fraise (1) la surface de section du conduit de réfrigérant (5) est pour l'essentiel constante.

5. Fraise selon l'une quelconque des revendications 1-3 **caractérisée en ce qu'**à l'intérieur de la fraise (1), la surface de section du conduit de réfrigérant (5) varie.

6. Fraise selon l'une quelconque des revendications précédentes **caractérisée en ce que** la fraise (1) comporte plusieurs zones de sortie (7) d'un conduit de réfrigérant (5) et que ceux-ci sont reliés à l'intérieur de la fraise (1) à un conduit d'entrée commun, pour laquelle le conduit d'entrée débouche dans la face (3) de la fraise (1) dotée d'une forme de base de type arbre, s'éloignant en position d'utilisation de la pièce (2).

7. Fraise selon l'une quelconque des revendications précédentes **caractérisée en ce qu'**au moins une autre zone de sortie (16) d'un conduit de réfrigérant (5) est disposée de telle manière que la direction de sortie (17) d'un réfrigérant (8) guidé dans le conduit de réfrigérant (5) est dirigée en direction du sens de rotation (10) de la fraise (1).

8. Fraise selon l'une quelconque des revendications précédentes **caractérisée en ce que** la fraise (1) comporte au moins deux groupes de zones de sortie (7, 16), pour laquelle pour un premier groupe de zones de sortie (7), le réfrigérant (8) sortant de celles-ci est dirigé contre le sens de rotation (10) de la fraise (1) et pour un deuxième groupe le réfrigérant (8) guidé dans celles-ci est dirigé dans le sens de rotation (10) de la fraise.

9. Fraise selon la revendication 8 **caractérisée en ce que** le premier et le deuxième groupe de zones de sortie (7, 16) individuellement ou cumulés à un autre groupe fournissent un débit volumétrique différent en réfrigérant (8).

10. Fraise selon l'une quelconque des revendications précédentes **caractérisée en ce que** la forme du contour de section du conduit de réfrigérant (5) est symétrique ponctuelle et/ou symétrique linéaire.

11. Fraise selon l'une quelconque des revendications précédentes **caractérisée en ce que** la forme du contour de section d'au moins une zone de sortie (7, 16) d'un conduit de réfrigérant (5) est constituée de façon longitudinale.

12. Fraise selon la revendication 11 **caractérisée en ce que** l'axe longitudinal (18) comprend un angle y avec la ligne de rayon (15) s'éloignant du centre (12) de la fraise (1).

13. Fraise selon l'une quelconque des revendications précédentes **caractérisée en ce que** la forme du contour de section de la zone de sortie (7, 16) d'un conduit de réfrigérant (5) est constituée de façon réniforme.

14. Fraise selon l'une quelconque des revendications précédentes **caractérisée en ce qu'**au moins une autre zone de sortie (7, 16) d'un conduit de réfrigérant (5) sort de façon centrale de la face (3) de la fraise (1).
